# EUROPEAN PATENT APPLICATION

(11) **EP 4 759 516 A1**
(43) Date of publication of application: **17.06.2026**
(21) Application number: 24787853.1
(22) Date of filing: 08.03.2024
(51) Int. Cl.: B29C 64/393, B29C 64/118, B33Y 50/02

(54) **3D PRINTING METHOD AND APPARATUS, AND STORAGE MEDIUM AND COMPUTER PROGRAM PRODUCT**

(30) Priority: 13.04.2023 CN 202310396132
(71) Applicant: Shanghai Lunkuo Technology Co., Ltd., Shanghai 200120 (CN)
(72) Inventor: WU, Yifan, Shanghai 200120 (CN); TAO, Ye, Shanghai 200120 (CN)
(74) Representative: Grünecker Patent- und Rechtsanwälte PartG mbB
(86) International application number: PCT/CN2024/080758
(87) International publication number: WO 2024/212747

(57) **Abstract**

The embodiments of the present application provide a 3D printing method and apparatus, a storage medium, and a computer program product. The method is executed by a terminal and comprises: displaying an image of a 3D model and at least one set of print information corresponding to the 3D model, wherein any one set of print information comprises print result information and at least part of print configuration information; and generating a print instruction in response to a print operation of a user regarding the 3D model, wherein the print instruction is used to instruct the printing of the 3D model based on target print configuration information corresponding to target print information in the at least one set of print information. In the embodiments of the present application, after responding to the print operation of the user regarding the 3D model, the 3D model may be directly printed based on target print configuration information corresponding to target print information in the at least one set of print information as instructed by the generated print instruction, without the need for users to manually adjust the print configuration information settings, reducing the entry barrier for users, saving users' efforts, and enhancing operational convenience and efficiency.

## Description

The present application claims priority to the Chinese Patent Application filed with the China National Intellectual Property Administration on April 13, 2023, with application number 202310396132.X and titled "3D PRINTING METHOD AND APPARATUS, STORAGE MEDIUM, AND COMPUTER PROGRAM PRODUCT", the entire contents of which are incorporated herein by reference.

### TECHNICAL FIELD

The present application relates to the field of 3D printing technologies, in particular to a 3D printing method, a 3D printing apparatus, an electronic device, a computer non-volatile readable storage medium, and a computer program product.

### BACKGROUND

3D printing technology, also known as additive manufacturing, is a technique for constructing objects through layer-by-layer printing using bondable materials based on digital model files. 3D printing is typically achieved by using a 3D printer. A 3D printer, also known as a three-dimensional printer or an additive manufacturing device, is a process equipment for rapid prototyping. 3D printers are commonly used in fields such as mold manufacturing and industrial design to produce models or components. A typical 3D printing technology is Fused Deposition Modeling (FDM), which is a method for constructing three-dimensional objects through layer-by-layer printing using materials like powdered metal or plastic based on digital models. The three-dimensional printer used in this method feeds the molding material to the printing head in the form of a filament. The molding material is heated to a molten state inside the printing head through electric heating. The printing head moves relative to the base according to the path generated by the controller of the three-dimensional printer, printing out the three-dimensional object layer by layer. Currently, in the field of 3D printing technology, it is necessary to set the print configuration information of the 3D model before 3D printing to successfully print out the 3D model.

### SUMMARY

Embodiments of the present application provide a 3D printing method and apparatus, a storage medium, and a computer program product to optimize the setting of print configuration information for 3D models.

The embodiments of the present application disclose a 3D printing method. The method is executed by a terminal and comprises:
displaying an image of a 3D model and at least one set of print information corresponding to the 3D model, wherein any one set of print information comprises print result information and at least part of print configuration information; and
generating a print instruction in response to a print operation of a user regarding the 3D model, wherein the print instruction is used to instruct the printing of the 3D model based on target print configuration information corresponding to target print information in the at least one set of print information.

Optionally, the at least one set of print information comprises at least two sets of print information, and the method further comprises: in response to a first selection operation of the user regarding the print information, selecting one set of print information specified by the first selection operation from the at least two sets of print information as target print information, wherein the print instruction is used to instruct the printing of the 3D model based on target print configuration information corresponding to the target print information.

Optionally, the operation of displaying the image of the 3D model and the at least one set of print information corresponding to the 3D model is in response to a second selection operation of the user regarding the 3D model, wherein the second selection operation is used to select the 3D model.

Optionally, print configuration information corresponding to each set of print information in the at least one set of print information describes one 3D printing configuration for the 3D model, wherein the each set of print information comprises at least part of the print configuration information corresponding to the each set of print information.

Optionally, the print result information comprises slicing result information. Optionally, the slicing result information comprises at least one of 3D printing duration and required quantity of different-color materials.

Optionally, the print result information comprises at least one of user ratings and user reviews.

Optionally, the at least part of print configuration information comprises a supported 3D printer model.

Optionally, before said generating the print instruction, the method further comprises:
displaying at least two sets of part information corresponding to the target print configuration information, wherein the at least two sets of part information correspond to at least two sets of parts constituting the 3D model; and
in response to a third selection operation of the user regarding the part information, selecting one set of part information specified by the third selection operation from the at least two sets of part information as target part information, wherein the print instruction is used to instruct the printing of one set of parts corresponding to the target part information based on the target print configuration information.

Optionally, before said generating the print instruction, the method further comprises:
displaying at least two types of 3D printer models; and
in response to a fourth selection operation of the user regarding the 3D printer model, selecting a 3D printer model specified by the fourth selection operation from the at least two types of 3D printer models as a target 3D printer model;
said displaying the image of the 3D model and the at least one set of print information corresponding to the 3D model, comprises: displaying the at least one set of print information supporting the target 3D printer model.

Optionally, before said generating the print instruction, the method further comprises:
displaying at least two types of 3D printers; and
in response to a fifth selection operation of the user regarding the 3D printer, selecting a 3D printer specified by the fifth selection operation from the at least two types of 3D printers as a target 3D printer, wherein the print instruction is used to instruct the printing of the 3D model on the target 3D printer based on the target print configuration information;
said displaying the image of the 3D model and the at least one set of print information corresponding to the 3D model, comprises: displaying the at least one set of print information supporting the target 3D printer.

The embodiments of the present application further disclose a 3D printing device. The apparatus is applied to a terminal and comprises:
an information display module for displaying an image of a 3D model and at least one set of print information corresponding to the 3D model, wherein any one set of print information comprises print result information and at least part of print configuration information; and
an instruction generation module for generating a print instruction in response to a print operation of a user regarding the 3D model, wherein the print instruction is used to instruct the printing of the 3D model based on target print configuration information corresponding to target print information in the at least one set of print information.

Optionally, the at least one set of print information comprises at least two sets of print information, and the apparatus further comprises:
an information selection module for, in response to a first selection operation of the user regarding the print information, selecting one set of print information specified by the first selection operation from the at least two sets of print information as target print information, wherein the print instruction is used to instruct the printing of the 3D model based on target print configuration information corresponding to the target print information.

Optionally, the operation of displaying the image of the 3D model and the at least one set of print information corresponding to the 3D model is in response to a second selection operation of the user regarding the 3D model, wherein the second selection operation is used to select the 3D model.

Optionally, print configuration information corresponding to each set of print information in the at least one set of print information describes one 3D printing configuration for the 3D model, wherein the each set of print information comprises at least part of the print configuration information corresponding to the each set of print information.

Optionally, the print result information comprises slicing result information. Optionally, the slicing result information comprises at least one of 3D printing duration and required quantity of different-color materials.

Optionally, the print result information comprises at least one of user ratings and user reviews. Optionally, the at least part of print configuration information comprises a supported 3D printer model.

Optionally, the apparatus further comprises:
a part information display module for displaying at least two sets of part information corresponding to the target print configuration information, wherein the at least two sets of part information correspond to at least two sets of parts constituting the 3D model; and
a part information selection module for, in response to a third selection operation of the user regarding the part information, selecting one set of part information specified by the third selection operation from the at least two sets of part information as target part information, wherein the print instruction is used to instruct the printing of one set of parts corresponding to the target part information based on the target print configuration information.

Optionally, the apparatus further comprises:
a printer model display module for displaying at least two types of 3D printer models; and
a printer model selection module for, in response to a fourth selection operation of the user regarding the 3D printer model, selecting a 3D printer model specified by the fourth selection operation from the at least two types of 3D printer models as a target 3D printer model;
the information display module comprises an information display submodule for displaying the at least one set of print information supporting the target 3D printer model.

Optionally, the apparatus further comprises:
a printer display module for displaying at least two types of 3D printers; and
a printer selection module for, in response to a fifth selection operation of the user regarding the 3D printer, selecting a 3D printer specified by the fifth selection operation from the at least two types of 3D printers as a target 3D printer, wherein the print instruction is used to instruct the printing of the 3D model on the target 3D printer based on the target print configuration information;
the information display module comprises an information display submodule for displaying the at least one set of print information supporting the target 3D printer.

The embodiments of the present application further disclose an electronic device. The electronic device comprises a processor, a communication interface, a memory, and a communication bus, wherein the processor, the communication interface, and the memory communicate with each other through the communication bus;
the memory is used for storing a computer program; and
the processor is used for executing the program stored in the memory to implement the method as described in the embodiments of the present application.

The embodiments of the present application further disclose a computer non-volatile readable storage medium storing instructions. The instructions, when executed by one or more processors, cause the processor to execute the method as described in the embodiments of the present application.

The embodiments of the present application further disclose a computer program product. When the computer program product is run on a terminal, the terminal implements the method as described in the embodiments of the present application. In the embodiments of the present application, after responding to the print operation of the user regarding the 3D model, the 3D model may be directly printed based on target print configuration information corresponding to target print information in the at least one set of print information as instructed by the generated print instruction, without the need for users to manually adjust the print configuration information settings, reducing the entry barrier for users, saving users' efforts, and enhancing operational convenience and efficiency, thereby optimizing the setting of print configuration information for 3D models.

### BRIEF DESCRIPTION OF THE DRAWINGS

FIG. 1 is a flowchart illustrating the steps of a 3D printing method according to an embodiment of the present application;
FIG. 2 is a schematic diagram of a print configuration information list for a 3D model according to an embodiment of the present application;
FIG. 3 is one of the schematic diagrams illustrating the upload of print information according to an embodiment of the present application;
FIG. 4 is another schematic diagram illustrating the upload of print information according to an embodiment of the present application;
FIG. 5 is a schematic diagram illustrating the architecture of a 3D printing system according to an embodiment of the present application;
FIG. 6 is a schematic diagram illustrating the selection of a 3D model according to an embodiment of the present application;
FIG. 7 is a schematic diagram illustrating the selection of print information according to an embodiment of the present application;
FIG. 8 is a schematic diagram illustrating the selection of a part according to an embodiment of the present application;
FIG. 9 is a block diagram illustrating the structure of a 3D printing device according to an embodiment of the present application;
FIG. 10 is a block diagram of an electronic device according to an embodiment of the present application; and
FIG. 11 is a block diagram of a computer non-volatile readable storage medium according to an embodiment of the present application.

### DETAILED DESCRIPTION

In order to make the above objectives, features, and advantages of the present application more clearly and easily understandable, a further detailed description of the present application will be provided in conjunction with the accompanying drawings and specific embodiments.

In the field of 3D printing technology, it is necessary to set the print configuration information of the 3D model before 3D printing to successfully print out the 3D model. The print configuration information includes at least:
Slicing parameters: Each part may vary (filling rate, filling pattern, whether to add supports, whether to add a skirt, filament type, color). The 3D printing process typically includes: 1) acquiring a 3D model; 2) slicing the 3D model; and 3) the 3D printer completing the printing of the 3D model based on the slicing results. However, setting the slicing parameters related to the slicing requires some practical experience.

Model coloring: Coloring operations are performed on a monochrome model, which is then printed out using a printer with a multi-material system.

Orientation and plate arrangement of model parts: For some parts, the correct orientation is required for successful printing. For example, tires need to be laid flat to ensure successful printing, whereas standing them up would lead to printing failure. Many models cannot be completed in a single print (due to reasons such as different filament types used for parts, a large number of parts, etc.), therefore it is necessary to arrange the various parts compactly on different plates. Each plate represents one printing task.

The series of operations involved in print configuration information are too difficult and complicated for users, which is mainly reflected in that:
1. The entry barrier is too high for novice users who need to understand the meaning of each parameter.
2. There are many parameters and orientations to be set, making it difficult to set them all right at once. Often, the adjustment to a certain parameter is only made after a failed printing.
3. The operational efficiency is low, with some operations even difficult to complete on a mobile phone. For example, coloring, plate arrangement, and orientation are all inefficient to operate on a mobile phone. Setting and checking parameters for special parts are also quite cumbersome.
4. Printing experiences cannot be reused, and each user who uses the model has to go through these complicated operations, which is very painful.

Based on this, a 3D printing method and apparatus, a storage medium, and a computer program product are provided in the embodiments of the present application, allowing the printing experiences of creators and other users to be reused and interactively presented to other users in a friendly manner. Even novice users can print 3D models of the same quality as designers and experienced 3D printing users with just one click, significantly lowering the entry barrier for 3D printing.

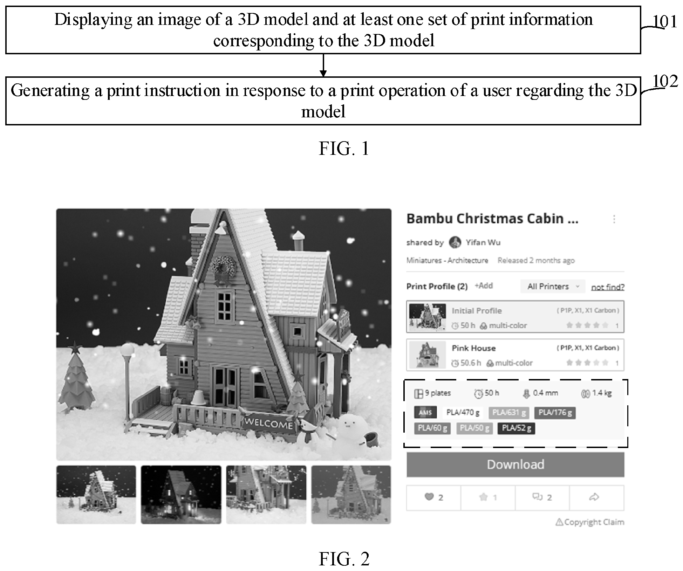

Referring to FIG. 1, a flowchart illustrating the steps of a 3D printing method according to an embodiment of the present application is shown. The 3D printing method is executed by a terminal and the steps include:
Step 101: Displaying an image of a 3D model and at least one set of print information corresponding to the 3D model.

The 3D printing method in the present application is applied to terminals (such as mobile terminals, fixed terminals, 3D printers with display screens, etc.). Specifically, the 3D printing method in the present application may be achieved through applications, application software, or web pages on the terminals.

Each set of print information includes print result information and at least part of print configuration information.

The print configuration information refers to the configuration information used for printing a 3D model, such as slicing parameters, part information (plate arrangement information), part orientation, coloring information, material information, nozzle information, etc.

The print result information refers to the result information obtained after the 3D printing of the 3D model based on the print configuration information. Users may preview the result of the 3D printing of the 3D model based on the print configuration information according to the displayed print result information. This allows users to understand the printing effects and the printing requirements of the print configuration information before printing, facilitating users in carrying out print operations regarding the 3D model.

Before displaying the image of the 3D model and at least one set of print information corresponding to the 3D model on the terminal, it is necessary to first acquire the image of the 3D model and at least one set of print information corresponding to the 3D model from the cloud server. For example, the terminal sends an information request message to the cloud server. Upon receiving the information request message, the cloud server responds by sending the image of the 3D model along with at least one set of print information corresponding to the 3D model to the terminal, allowing the terminal to display the image of the 3D model and the at least one set of print information corresponding to the 3D model. Additionally, besides the aforementioned method of acquiring the image of the 3D model and at least one set of print information corresponding to the 3D model from the cloud server by the terminal, the image of the 3D model and the at least one set of print information corresponding to the 3D model may also be set to be acquired from other terminals or stored in the terminal in advance. The specifics may be set according to actual needs, which are not limited in the embodiments of the present application. Specifically, the display interface of the terminal will display the image of the 3D model along with at least one set of print information corresponding to the 3D model. This allows users to refer to the image of the 3D model and the print result information in the print information to understand the 3D printing effects and the printing requirements of various print configuration information, facilitating users in carrying out print operations regarding the 3D model.

Step 102: Generating a print instruction in response to the print operation of a user regarding the 3D model.

The print instruction is used to instruct the printing of the 3D model based on the target print configuration information corresponding to the target print information in the at least one set of print information. The printing includes slicing or executing the slicing result by the printer.

Specifically, after displaying the image of the 3D model and at least one set of print information corresponding to the 3D model on the display interface of the terminal, a user may initiate a print operation regarding the 3D model. Particularly, in cases where only one set of print information is displayed, the user may directly initiate a print operation regarding the 3D model. The print operation may be, for example, clicking the print button displayed on the screen. The terminal responds to the print operation of the user regarding the 3D model by generating a print instruction so as to instruct, through the print instruction, the 3D printing of the 3D model based on the target print configuration information corresponding to the target print information in the at least one set of print information.

For example, when only one set of print information is displayed, it may be directly assumed that this set of print information serves as the target print information, and the print configuration information corresponding to the set of print information serves as the target print configuration information. Therefore, users may directly click the print button displayed on the screen to initiate the 3D printing of the 3D model through the target print configuration information corresponding to the target print information.

If there are at least two sets of print information displayed, one set of print information may be selected through methods of sorting by print result information (such as selecting one set of print information with the shortest print duration), random selection, or user selection. Additionally, the selected print information serves as the target print information, and the print configuration information corresponding to the target print information serves as the target print configuration information, thereby allowing for 3D printing of the 3D model directly using the target print configuration information corresponding to the target print information without the need to set parameters in the print configuration information. A quick 3D printing of the 3D model is thus achieved by directly using the existing print configuration information.

In addition, performing 3D printing on the 3D model based on the target print configuration information comprises: slicing the 3D model according to the target print configuration information to obtain the slicing result, which is used for performing 3D printing on the 3D model. The slicing result refers to converting the 3D model into a G-code file identifiable by the printer through slicing, and then generating a document containing print parameters, print time, layer height, and other relevant information. The slicing result is a crucial link in the 3D printing process, as it converts the 3D model into instruction files identifiable by the printer, providing essential guidance and control for the 3D printing.

In the embodiments of the present application, after generating the print instruction in response to the print operation of the user regarding the 3D model, the printer directly follows the print instruction to print the 3D model based on the target print configuration information corresponding to the target print information in at least one set of print information corresponding to the displayed 3D model. In this way, one-click printing of the 3D model can be achieved without the need for users to manually adjust the print configuration information settings, reducing the entry barrier for users, saving users' efforts, and enhancing operational convenience and efficiency thereby optimizing the setting of print configuration information for 3D models.

Based on the aforementioned embodiment, variant embodiments of the aforementioned embodiment are provided. It should be noted here that, for the brevity of the description, only the differences from the aforementioned embodiment are described in the variant embodiments.

In an embodiment of the present application, the at least one set of print information comprises at least two sets of print information. The method further comprises: in response to a first selection operation of a user regarding the print information, selecting one set of print information specified by the first selection operation from the at least two sets of print information as the target print information. The print instruction is used to instruct the printing of the 3D model based on the target print configuration information corresponding to the target print information.

The print result information refers to the result information obtained after the 3D printing of the 3D model based on the print configuration information. Users may preview the result of the 3D printing of the 3D model based on the print configuration information according to the displayed print result information. This allows users to understand the printing effects and the printing requirements of the print configuration information before printing, facilitating users in selecting the print information.

Before displaying the image of the 3D model and at least two sets of print information corresponding to the 3D model on the terminal, it is necessary to first acquire the image of the 3D model and at least two sets of print information corresponding to the 3D model from the cloud server. For example, the terminal sends an information request message to the cloud server. Upon receiving the information request message, the cloud server responds by sending the image of the 3D model along with at least two sets of print information corresponding to the 3D model to the terminal, allowing the terminal to display the image of the 3D model and the at least two sets of print information corresponding to the 3D model. Additionally, besides the aforementioned method of acquiring the image of the 3D model and at least two sets of print information corresponding to the 3D model from the cloud server by the terminal, the image of the 3D model and the at least two sets of print information corresponding to the 3D model may also be set to be acquired from other terminals or stored in the terminal in advance. The specifics may be set according to actual needs, which are not limited in the embodiments of the present application. Specifically, the display interface of the terminal will display the image of the 3D model along with at least two sets of print information corresponding to the 3D model. This allows users to refer to the image of the 3D model and the print result information in the print information to understand the 3D printing effects of various print configuration information, or allows users to browse at least part of the print configuration information they might be interested in, facilitating the selection of the at least two sets of print information corresponding to the 3D model.

After displaying the image of the 3D model and at least two sets of print information corresponding to the 3D model on the display interface of the terminal, users may select the print information based on the print result information in the print information. The terminal will respond to the first selection operation of the user regarding the print information by selecting one set of print information specified by the first selection operation from the at least two sets of print information as the target print information.

Subsequently, a print instruction is generated based on the selected target print information so as to instruct, through the print instruction, the 3D printing of the 3D model according to the target print configuration information corresponding to the target print information, ensuring that the 3D printing effect matches the desired effect of the user.

In the above embodiment, users may select one set of print information as the target print information from at least two sets of print information from the displayed print result information according to the print result information they have browsed or at least part of the print configuration information. Then, the 3D model is printed based on the target print configuration information corresponding to the target print information. With the aforementioned method, users may directly select the print configuration information to print the 3D model without the need for users to manually adjust the print configuration information settings, reducing the entry barrier for users, saving users' efforts, and enhancing operational convenience and efficiency.

In an embodiment of the present application, the operation of displaying an image of a 3D model and at least one set of print information corresponding to the 3D model is in response to a second selection operation of the user regarding the 3D model. The second selection operation is used to select the 3D model.

Specifically, before displaying the image of the 3D model and at least one set of print information corresponding to the 3D model on the display interface of the terminal, the terminal will display various (multiple) 3D models for users to select from. For example, when a user opens the application or web page, various 3D models will be displayed on the interface of the application or the web page. The user may initiate a second selection operation for a 3D model. The terminal responds to the user's second selection operation for the 3D model by displaying the image of the 3D model along with at least one set of print information corresponding to the 3D model, facilitating the user's selection of the print information for the 3D model.

In an embodiment of the present application, when the displayed 3D model corresponds to at least two sets of print information, any one of the at least two sets of print information includes a first parameter, and the other set of print information includes a second parameter. The parameter type of the first parameter is the same as the parameter type of the second parameter, but the numerical values of the first parameter are different from the numerical values of the second parameter.

Specifically, any one of the at least two sets of print information corresponding to the displayed 3D model includes a first parameter, and the other set of print information includes a second parameter. Additionally, the parameter type of the first parameter is the same as the parameter type of the second parameter, but the numerical values of the first parameter are different from or not entirely identical to the numerical values of the second parameter. For example, both the first parameter and the second parameter include slicing parameters in the print configuration information. However, the numerical values pertaining to layer thickness and the number of base layers of the slicing parameters differ or are not entirely identical within the first parameter and the second parameter.

In an embodiment of the present application, the print configuration information corresponding to each set of print information in the at least one set of print information describes one 3D printing configuration for the 3D model. The each set of print information comprises at least part of the print configuration information corresponding to the each set of print information.

Specifically, the print configuration information corresponding to each set of print information in the at least one set of print information displayed is mainly used to assist users in selecting the print information. Therefore, the print configuration information corresponding to each set of print information in the at least one set of print information describes one 3D printing configuration for the 3D model; the print configuration information corresponding to each set of print information may not be complete print configuration information, rather, each set of print information includes at least part of the print configuration information corresponding to each set of print information. After the user selects the target print configuration information, the complete print configuration information is acquired for the printing of the 3D model.

In an embodiment of the present application, the method further comprises: sending the print instruction to a cloud server, so as to allow the cloud server to slice the 3D model based on the target print configuration information to obtain the slicing result. The slicing result is used for execution by a 3D printer to complete the printing of the 3D model. The target print configuration information and the 3D model are pre-stored in the cloud server.

Specifically, the print instruction is generated based on the target print configuration information corresponding to the target print information. Therefore, the print instruction carries the index information of the target print configuration information. The terminal sends the print instruction to the cloud server, where the cloud server indexes the corresponding target print configuration information according to the index information in the print instruction, and slices the 3D model to obtain the slicing result (with the file usually in G-code format) according to the target print configuration information. The slicing result is used for execution by the 3D printer to complete the printing of the 3D model. For example, the slicing result and the target print configuration information are sent to the 3D printer, which prints the 3D model based on the slicing result and the 3D print configuration information.

In the above embodiment, after the user selects the 3D model and the target print configuration information, a print instruction is sent to the cloud. The cloud server slices the 3D model according to the target print configuration information based on the print instruction to obtain the slicing result and then sends the slicing result and the target print configuration information to the 3D printer for printing. Since the target print configuration information is pre-stored in the cloud server and user input is not required, users only need to perform simple selection operations for the 3D model, the target print configuration information, etc., throughout the process to achieve the printing of the 3D model. This eliminates the need to spend efforts on setting the target print configuration information, reducing the entry barrier for users, saving users' efforts, and enhancing operational convenience and efficiency. Furthermore, the slicing process of the 3D model performed by the cloud server may be displayed on the terminal and/or the printer.

**In** an embodiment of the present application, generating the print instruction, comprises: acquiring the target print configuration information from a cloud server; and slicing the 3D model based on the target print configuration information to obtain the print instruction. The method further comprises: sending the print instruction to a 3D printer communicatively connected to the terminal, or sending the print instruction to a cloud server, such that the cloud server forwards the print instruction to the 3D printer. The print instruction is used for execution by the 3D printer to complete the printing of the 3D model. Furthermore, generating the print instruction further comprises: acquiring the 3D model from a cloud server.

Specifically, besides the aforementioned method of slicing the 3D model on the cloud server, the 3D model may also be directly sliced on the terminal. Since the terminal displays at least part of the target print configuration information, which may not be complete, it is necessary to send a request to the cloud server to acquire the target print configuration information and/or the 3D model. The complete target print configuration information and/or 3D model are downloaded to the local terminal, and then the 3D model is sliced according to the target print configuration information to obtain the print instruction.

Then, the print instruction is sent to the cloud server for forwarding to the 3D printer, or directly sent to the 3D printer, such that the 3D printer can print the 3D model based on the received print instruction.

In the above embodiment, after the user selects the 3D model and the target print configuration information, the 3D model is sliced directly on the terminal according to the target print configuration information to obtain the slicing result and generate the print instruction. The print instruction is sent to the cloud server for forwarding to the 3D printer, or directly sent to the 3D printer, such that the 3D printer can print the 3D model based on the received print instruction. Throughout the process, users only need to perform simple selection operations for the 3D model, the target print configuration information, etc., to achieve the printing of the 3D model. This eliminates the need to spend efforts on setting the target print configuration information, reducing the entry barrier for users, saving users' efforts, and enhancing operational convenience and efficiency.

In an embodiment of the present application, acquiring the target print configuration information comprises: sending a request message for the target print configuration information to a cloud server, so as to allow the cloud server to return the target print configuration information according to the request message for the target print configuration information.

Specifically, the terminal acquires the target print configuration information from the cloud server. Specifically, the terminal sends a request message for the target print configuration information to the cloud server. When the cloud server receives the request message for the target print configuration information, the request message for the target print configuration information carries the index information of the target print configuration information; therefore, the cloud server may index the target print configuration information according to the index information and return the information to the terminal.

It should be noted that the print configuration information in the cloud server is the print configuration information uploaded and verified by the model author or experienced users for the 3D model. Additionally, the model author or experienced users may also upload corresponding user reviews, user ratings, and/or images for other users to reference for future use. The user reviews and user ratings belong to the print result information.

In an embodiment of the present application, the operation of generating a print instruction is in response to the print operation of the user regarding the 3D model. Specifically, after selecting a 3D model and target print information, the user also needs to initiate a print operation regarding the 3D model. Then, the terminal may respond to the print operation of the user regarding the 3D model by generating a print instruction based on the user-selected 3D model and the target print configuration information corresponding to the target print information, so as to instruct, through the print instruction, the printing of the 3D model according to the target print configuration information corresponding to the target print information. In an embodiment of the present application, the print result information comprises slicing result information.

In an embodiment of the present application, the slicing result information comprises at least one of the 3D printing duration and the required quantity of different-color materials.

Specifically, the slicing result information is the information obtained after slicing the 3D model based on the print configuration information. The slicing result information may comprise the 3D printing duration, filament types, the required quantity of different-color materials, and other relevant information. The information may help users better understand the details and parameters of 3D printing, facilitating the users' selection of print configuration information. The 3D printing duration refers to the time taken to print the 3D model using the print configuration information corresponding to the print result information. The required quantity of different-color materials refers to the required quantity or consumption of different color materials used during the printing process of the 3D model based on the print configuration information corresponding to the print result information.

In the above embodiment, during the process of selecting the target print information, users may refer to the slicing result information in the print result information and select the desired target print information according to their actual needs. This allows for printing the 3D model based on the target print configuration information in the target print information, thus achieving the desired 3D printing effect.

In an embodiment of the present application, the print result information comprises at least one of the user ratings and the user reviews.

Specifically, the displayed print result information comprises at least one of the user ratings and the user reviews. User ratings are scores given by other users for the printing process and effects after completing the printing of the 3D model using the print configuration information corresponding to the print result information. User reviews are comments from other users for the printing process and effects after completing the printing of the 3D model using the print configuration information corresponding to the print result information.

In the above embodiment, during the process of selecting the target print information, users may refer to the user ratings and the user reviews in the print result information and select the desired target print information according to their actual needs. This allows for printing the 3D model based on the target print configuration information in the target print information, thus achieving the desired 3D printing effect.

In an embodiment of the present application, the at least part of the print configuration information comprises a supported 3D printer model. There may be one or at least two supported 3D printer models.

Specifically, the at least part of the print configuration information displayed comprises the 3D printer models supported by the print configuration information. Users may select the target print information according to the 3D printer model they own. For example, the 3D printer models supported by the target print configuration information corresponding to the selected target print information should include the 3D printer model that the user intends to use for printing.

It should be noted that during the process of slicing the 3D model based on the target print configuration information, slicing will be performed according to the 3D printer models supported by the target print configuration information. When there is only one 3D printer model supported by the target print configuration information, the default action would be to slice the 3D model using the 3D printer model without requiring a selection operation on the 3D printer model. When there are at least two types of 3D printer models supported by the target print configuration information, one type of the at least two types of printer models must be selected for slicing the 3D model. The selection method may be set to either default, random, or as specified by the user.

Referring to FIG. 2, a schematic diagram of a print configuration information list for a 3D model according to an embodiment of the present application is shown. On the left side of the figure, there is an image of the 3D model, while on the right side is the print information list (Print Profile (2)). The print information list contains two sets of print information, which are Initial Profile and Pink House. At least part of the print configuration information corresponding to the Initial Profile comprises the 3D printer models supported by the print configuration information, such as P1P, X1, and X1 carbon. The print result information corresponding to the Initial Profile comprises a user rating of 4 stars and a 3D printing duration of 50 hours. The content within the dashed box in the figure represents the print configuration information corresponding to the Initial Profile, which is displayed upon clicking on the Initial Profile. The print configuration information corresponding to the Initial Profile comprises a 3D printing duration of 50 hours, the nozzle information of 0.4 mm, an Automatic Material System (AMS) requirement, and the required quantity for six different color materials: PLA/470g, PLA/631g, PLA/176g, PLA/60g, PLA/50g, and PLA/52g. The required quantity for six different color materials is distinguished by backgrounds of different colors.

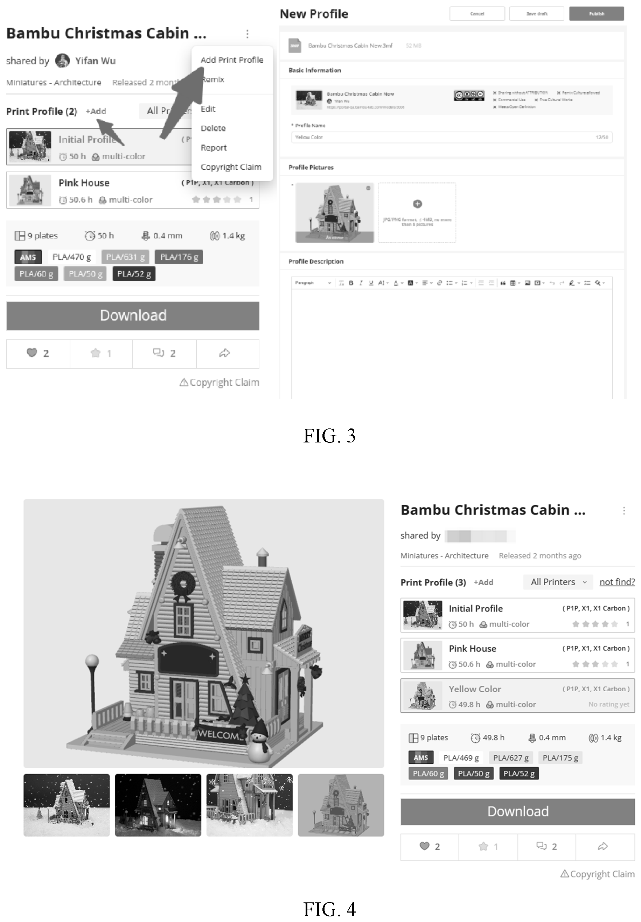

Referring to FIG. 3, one of the schematic diagrams illustrating the upload of print information according to an embodiment of the present application is shown. Clicking the add button (+Add) next to the Print Profile (2) displays more options. From the more options, click Add Print Profile to navigate to the New Profile window. New print configuration information, user ratings, user reviews, etc., may be added in the New Profile window to achieve the addition of new print information. After adding the new print information, referring to FIG. 4, another schematic diagram illustrating the upload of print information according to an embodiment of the present application is shown. The print information list has been updated to include the Yellow Color print information.

In an embodiment of the present application, after completing the printing of the 3D model, the method further comprises: in response to a rating operation of the user regarding the target print configuration information, sending the rating of the user for the target print configuration information to a cloud server, such that the cloud server updates the user rating of the target print configuration information based on the rating.

Specifically, after a user completes the printing of a 3D model based on the generated print instruction, the user may initiate a rating operation regarding the target print configuration information according to the printing process of the 3D model and the print result; the user's rating of the target print configuration information from the rating operation will be sent to a cloud server, such that the cloud server updates the user rating of the target print configuration information based on the rating. For example, the rating will be added to the ratings of other users previously uploaded, with their average value as the updated user rating.

It should be noted that after completing the print operation of the 3D model, in addition to uploading their rating for the target print configuration information, users may also upload user reviews for the target print configuration information to the cloud server, and share images/screenshots/photos of the printed 3D model to provide reference for other subsequent users.

In an embodiment of the present application, after selecting one set of print information specified by the selection operation from the at least two sets of print information as the target print information, or before generating a print instruction (in cases where only one set of print information is displayed), the method further comprises: displaying at least two sets of part information corresponding to the target print configuration information, wherein the at least two sets of part information correspond to at least two sets of parts constituting the 3D model; and in response to a third selection operation of the user regarding the part information, selecting one set of part information specified by the third selection operation from the at least two sets of part information as the target part information. The print instruction is used to instruct the printing of one set of parts corresponding to the target part information based on the target print configuration information.

Optionally, if one set of part information is displayed, the default action would be to print a set of parts corresponding to the part information without requiring a selection operation on the part information.

The at least two sets of part information may also be referred to as at least two plates of part information. Since there are 3D printing models with an excessive number of parts, the parts of the 3D printing model cannot be printed out at once. Therefore, the parts of the 3D printing model need to be divided into multiple plates for printing in batches or multiple times, with each batch or each time printing a plate of parts. Specifically, after selecting one set of print information specified by the selection operation from at least two sets of print information as the target print information, or before generating a print instruction, the display interface of the terminal will display at least two sets of part information corresponding to the target print configuration information. A user may initiate a third selection instruction for the part information. The terminal responds to the user's third selection operation regarding the part information by selecting one set of part information specified by the third selection operation from the at least two sets of part information as the target part information. Then, the print instruction may instruct the printing of a set of parts corresponding to the target part information based on the target print configuration information. After completing the printing of the parts corresponding to the target part information, the other sets of part information are then treated as the target part information, and the parts corresponding to the target part information are printed until the 3D model printing is completed.

In an embodiment of the present application, after selecting one set of print information specified by the selection operation from the at least two sets of print information as the target print information, or before generating a print instruction, or before displaying at least one set of print information corresponding to a 3D model, the method may further comprise: displaying at least two types of 3D printer models; and in response to a fourth selection operation of the user regarding the 3D printer model, selecting the 3D printer model specified by the fourth selection operation from the at least two types of 3D printer models as the target 3D printer model.

Specifically, after selecting one set of print information specified by the selection operation from at least two sets of print information as the target print information, or before generating a print instruction, or before displaying at least one set of print information corresponding to a 3D model, the display interface of the terminal will display at least two types of 3D printer models. In this case, a user may initiate a fourth selection operation instruction regarding the 3D printer model. The terminal responds to the user's fourth selection operation regarding the 3D printer model by selecting the 3D printer model specified by the fourth selection operation from the at least two types of 3D printer models as the target 3D printer model. Different models of 3D printers vary in both hardware and software aspects. Parameters such as the size of the printing head, maximum print size, maximum temperature, and printing speed may differ. Therefore, during the slicing process, it is necessary to slice the 3D model based on the target 3D printer model to ensure that the 3D model can be successfully printed from the 3D printer of the target 3D printer model. Correspondingly, the print instruction is used to instruct the printing of the 3D model based on the target print configuration information including the target 3D printer model.

Specifically, for the case where before displaying at least one set of print information corresponding to a 3D model, the display interface of the terminal may display at least two types of 3D printer models, the terminal will respond to the user's fourth selection operation regarding the 3D printer model by selecting the 3D printer model specified by the fourth selection operation from the at least two types of 3D printer models as the target 3D printer model; then, the terminal may display at least one set of print information that supports the target 3D printer model.

It should be noted that, for the case where before generating a print instruction, the display interface of the terminal displays at least two types of 3D printer models, the sequence between two operations by the terminal of displaying at least two types of 3D printer models and displaying at least one set of print information corresponding to a 3D model is not limited, and they may be displayed simultaneously. In this case, the at least part of the print configuration information for displaying may include (one or more types of) 3D printer models supported (by the complete print configuration information corresponding to the at least part of the print configuration information) for users to reference.

Specifically, for the case where after selecting one set of print information specified by the selection operation from at least two sets of print information as the target print information, the display interface of the terminal displays at least two types of 3D printer models, the at least two types of 3D printer models in such a case are the 3D printer models supported by the target print configuration information. Optionally, after selecting one set of print information specified by the selection operation from at least two sets of print information as the target print information, or before generating a print instruction, or before displaying at least one set of print information corresponding to a 3D model, one type of 3D printer model may also be displayed. In this case, the default action would be to use the 3D printer model as the target 3D printer model without the need for users to select a 3D printer model.

In an embodiment of the present application, after selecting one set of print information specified by the first selection operation from the at least two sets of print information as the target print information, or before generating a print instruction, or before displaying at least one set of print information corresponding to a 3D model, the method further comprises: displaying at least two types of 3D printers; and in response to a fifth selection operation of the user regarding the 3D printer, selecting the 3D printer specified by the fifth selection operation from the at least two types of 3D printers as the target 3D printer. The print instruction is used to instruct the printing of the 3D model on the target 3D printer based on the target print configuration information. Specifically, the print instruction is used to instruct the cloud server to slice the 3D model based on the target print configuration information and send the slicing result to the target 3D printer.

The 3D printer supported by the target print configuration information refers to the 3D printer model supported by the target print configuration information, and the 3D printer is a printer device owned by the user. For example, if the 3D printer models supported by the target print configuration information are X1, X1C, P1P, and P1S, and the user owns three X1C printers, then the three X1C printers are displayed. Specifically, after selecting one set of print information specified by the selection operation from at least two sets of print information as the target print information, or before generating a print instruction, or before displaying at least one set of print information corresponding to a 3D model, the display interface of the terminal will display at least two types of 3D printers. In this case, a user may initiate a fifth selection operation instruction regarding the 3D printer. The terminal responds to the user's fifth selection operation regarding the 3D printer by selecting the 3D printer specified by the fifth selection operation from the at least two types of 3D printers as the target 3D printer. During the slicing process, the 3D model needs to be sliced according to the 3D printer model of the target 3D printer in the target print configuration information. Then, the 3D model is printed on the target 3D printer based on the slicing result.

It should be noted that, for the case where before generating a print instruction, the display interface of the terminal displays at least two types of 3D printers, the sequence between two operations by the terminal of displaying at least two types of 3D printers and displaying at least one set of print information corresponding to a 3D model is not limited, and they may be displayed simultaneously. In this case, the at least part of the print configuration information for displaying may include (one or more types of) 3D printer models supported (by the complete print configuration information corresponding to the at least part of the print configuration information) for users to reference.

Specifically, for the case where after selecting one set of print information specified by the selection operation from at least two sets of print information as the target print information, the display interface of the terminal displays at least two types of 3D printers, the at least two types of 3D printers in such a case are the 3D printers supported by the target print configuration information.

For the case where before displaying at least one set of print information corresponding to a 3D model, the display interface of the terminal may display at least two types of 3D printers, the terminal will respond to the user's fifth selection operation regarding the 3D printer by selecting the 3D printer specified by the fifth selection operation from the at least two types of 3D printers as the target 3D printer; then, the terminal may display at least one set of print information that supports the target 3D printer model.

It should be noted that, after selecting one set of print information specified by the selection operation from at least two sets of print information as the target print information, or before generating a print instruction, or before displaying at least one set of print information corresponding to a 3D model, one type of 3D printer may also be displayed. In this case, the default action would be to use the 3D printer as the target 3D printer without the need for users to select a 3D printer.

In an embodiment of the present application, the at least part of the print configuration information comprises filament types. Specifically, there may be one or at least two filament types.

In an embodiment of the present application, after selecting one set of print information specified by the first selection operation from the at least two sets of print information as the target print information, or before generating a print instruction, the method further comprises: displaying at least two filament types; and in response to a sixth selection operation of the user regarding the filament type, selecting the filament type specified by the sixth selection operation from the at least two filament types as the target filament type. There may be one or at least two target filament types.

Specifically, after selecting one set of print information specified by the selection operation from at least two sets of print information as the target print information, or before generating a print instruction, the display interface of the terminal will display at least two filament types. In this case, a user may initiate a sixth selection operation instruction regarding the filament type. The terminal responds to the user's sixth selection operation regarding the filament type by selecting the filament type specified by the sixth selection operation from the at least two filament types as the target filament type. Different types of 3D printing materials have different melting points, hardness, elasticity, shrinkage rates, and other characteristics, which directly influence the selection and adjustment of printing parameters. Therefore, during the process of slicing the 3D model based on the target print configuration information, different filament types in the target print configuration information will result in different slicing results.

Specifically, for the case where after selecting one set of print information specified by the selection operation from at least two sets of print information as the target print information, the display interface of the terminal displays at least two filament types, the at least two filament types in such a case are the filament types supported by the target print configuration information.

It should be noted that, after selecting one set of print information specified by the selection operation from at least two sets of print information as the target print information, or before generating a print instruction, one filament type may also be displayed. In this case, the default action would be to use the filament type as the target filament type without the need for users to select a filament type.

In an embodiment of the present application, the at least part of the print configuration information comprises hot bed types. Specifically, there may be one or at least two hot bed types.

In an embodiment of the present application, after selecting one set of print information specified by the first selection operation from the at least two sets of print information as the target print information, or before generating a print instruction, the method further comprises: displaying at least two hot bed types; and in response to a seventh selection operation of the user regarding the hot bed type, selecting the hot bed type specified by the seventh selection operation from the at least two hot bed types as the target hot bed type.

Specifically, after selecting one set of print information specified by the selection operation from at least two sets of print information as the target print information, or before generating a print instruction, the display interface of the terminal will display at least two hot bed types. In this case, a user may initiate a seventh selection operation instruction regarding the hot bed type. The terminal responds to the user's seventh selection operation regarding the hot bed type by selecting the hot bed type specified by the seventh selection operation from the at least two hot bed types as the target hot bed type. A hot bed is a commonly used auxiliary tool in 3D printing, which can help the printing material adhere better to the print table, prevent warping and detachment issues, and improve printing quality and precision. Different types of hot beds have different characteristics and operating principles. When slicing, appropriate printing parameters are selected based on the hot bed type. Therefore, during the process of slicing the 3D model based on the target print configuration information, different hot bed types in the target print configuration information will result in different slicing results.

Specifically, for the case where after selecting one set of print information specified by the selection operation from at least two sets of print information as the target print information, the display interface of the terminal displays at least two hot bed types, the at least two hot bed types in such a case are the hot bed types supported by the target print configuration information.

It should be noted that, after selecting one set of print information specified by the selection operation from at least two sets of print information as the target print information, or before generating a print instruction, one hot bed type may also be displayed. In this case, the default action would be to use the filament type as the target hot bed type without the need for users to select a hot bed type.

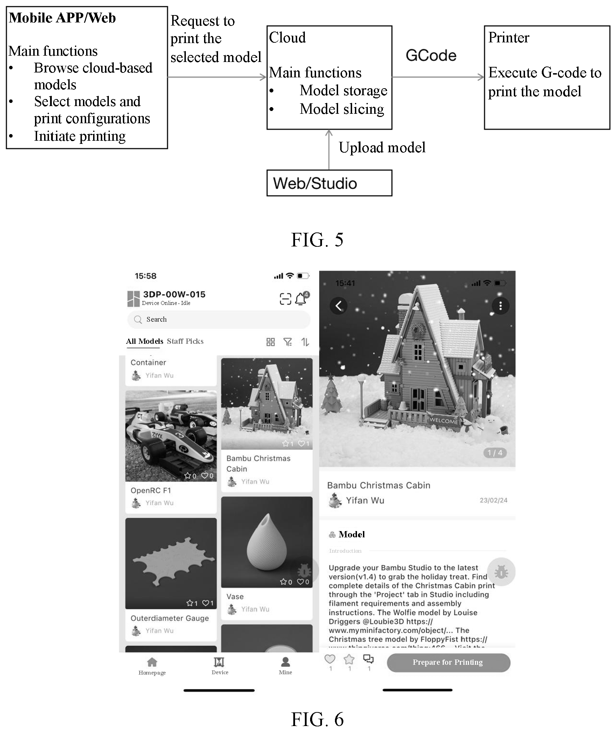

To better understand the embodiments in the present application, illustrative explanations are provided below with reference to FIG. 5.

The cloud server (cloud end) is communicatively connected to both the terminal (mobile APP/Web) and the printer network. Model authors or experienced users upload 3D models, along with the print configuration information, user ratings, and user reviews corresponding to the 3D models to the cloud server via Web/Studio. The cloud server, upon acquiring the print configuration information corresponding to the 3D model, slices the 3D model based on the print configuration information corresponding to the 3D model, obtaining the slicing result of the 3D model, which may include the slicing result information. Alternatively, model authors or experienced users upload 3D models, along with the print configuration information, slicing results, user ratings, and user reviews corresponding to the 3D models to the cloud server via Web/Studio, there is no need for the cloud server to slice the 3D model based on the print configuration information corresponding to the 3D model, thereby saving server resources. The cloud server stores the received or acquired 3D models and the print information corresponding to the 3D models. The 3D model images may be uploaded to the cloud server by the model author or experienced user via Web/Studio, or the 3D model images may be generated by the cloud server based on the 3D model or the slicing result.

The terminal requests the cloud server to acquire the 3D model and the print information corresponding to the 3D model for display. Users may select from the print information list the print information settings of slicing that match their preferences (such as color, strength, printing speed, or optimizing certain slicing parameters), have high ratings, and support their own printers. After selecting a 3D model and the target print information corresponding to the 3D model, users may initiate the printing, requesting the cloud server to print the selected 3D model based on the target print configuration information corresponding to the target print information. The cloud server indexes the corresponding target print configuration information based on the index information in the request. Before slicing the 3D model based on the target print configuration information (3mf), users may need to select the printer (or printer model), hot bed type, or filament type on the print preparation interface (The printer model, hot bed type, or filament type needs to be compatible with the target print configuration information, i.e., supported by the target print configuration information). Alternatively, users may not need to make a selection but directly use the default, pre-stored, or preset types from the cloud server, or directly use the types in the target print configuration information (3mf). During slicing, the printer model, hot bed type, and filament type in the 3mf are replaced with the user-selected printer model, hot bed type, and filament type. For example, if the 3mf contains X1C and the user wants to send it to an X1 printer device for printing, then during the slicing, the printer model in the 3mf will be replaced with X1, and the material parameter (e.g., PLA) in the 3mf will be replaced with the user-selected material parameter (e.g., ABS).

Then, the 3D model is sliced based on the target print configuration information to obtain the slicing result (G-code), which is sent to the printer to complete the printing of the 3D model through the printer. After the 3D model is printed, the user may rate and review the print configuration information, and share photos according to the actual printing effect.

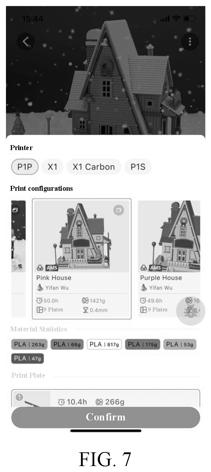

It should be noted that the slicing of the 3D model is performed not only on the cloud server but may also be performed on the terminal. Specifically, the terminal sends a request to the cloud server to acquire the complete 3D model and the corresponding target print configuration information of the 3D model. The terminal then slices the 3D model based on the target print configuration information to obtain the slicing result, which is sent to the cloud server for forwarding to the printer, or directly sent to the printer to complete the printing of the 3D model through the printer. Referring to FIGs. 6 to 8, the process of one-click printing on the mobile terminal APP is specifically depicted as follows:
Referring to FIG. 6, a schematic diagram illustrating the selection of a 3D model according to an embodiment of the present application is shown. On the left side of FIG. 6, all 3D models including OpenRC F1, Bambu Christmas Cabin, etc. are shown in a list of 3D models. When a user clicks on any one of the 3D models, for example, clicking on the Bambu Christmas Cabin model, then the Bambu Christmas Cabin model is selected. This leads to the model description page of the Bambu Christmas Cabin model (shown on the right side of FIG. 6), allowing the user to print the Bambu Christmas Cabin model. After the user clicks on Prepare for Printing, the interface in FIG. 7 is displayed.

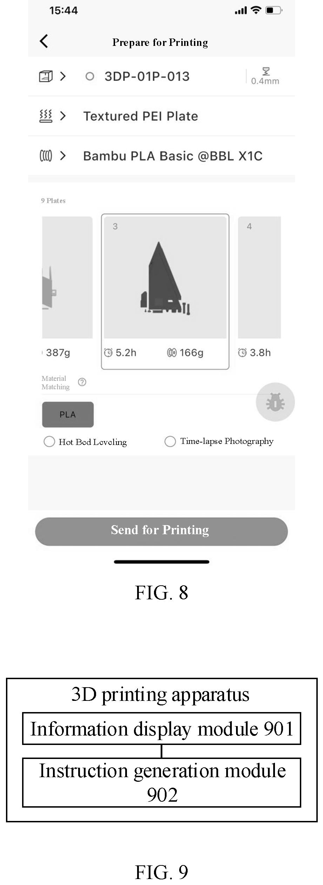

Referring to FIG. 7, a schematic diagram illustrating the selection of print information according to an embodiment of the present application is shown. Referring to FIG. 7, users may select the printer model and print information, and after the user clicks on Confirm, the interface shown in FIG. 8 is displayed. Referring to FIG. 8, a schematic diagram illustrating the selection of a part according to an embodiment of the present application is shown. After confirming the printer, build plate , filament type, and target part information, the user will send the confirmed target print configuration information to the cloud server, and the cloud server slices the 3D model to obtain the slicing result and sends the result to the printer for printing the 3D model.

In the above embodiment, ordinary users no longer need to worry about the slicing configuration of the model. As verified configurations from others can be used directly, users can print directly after completing the selection of the print configuration information on the terminal. If encountering slicing configuration issues during actual printing, after solving the issues, users can share their print configurations by uploading them to the model's print information list for others to use. The user ratings, user reviews, and actual photos shared by other users for each print information can be viewed before printing. Compared to G-code, uploading 3mf offers greater flexibility as it does not constrain other users to utilize the same filaments, hot bed types, or printer models as the person who uploaded the file. During printing, it is possible to re-slice based on the actually connected printer, filament type, and hot bed type (the slicing process may be carried out on the cloud or mobile terminal).

It should be noted that, for simplicity in describing the method embodiments, they are expressed as a series of combined actions. However, those skilled in the art should understand that the embodiments of the present application are not limited by the described action sequence. According to the embodiments of the present application, certain steps may be performed in a different order or simultaneously. Further, those skilled in the art should also learn that the embodiments described in the specification are all preferred embodiments. The actions involved are not necessarily essential to the embodiments of the present application.

Referring to FIG. 9, a block diagram illustrating the structure of a 3D printing device according to an embodiment of the present application is shown. The 3D printing device is applied to a terminal and comprises:
an information display module 901 for displaying an image of a 3D model and at least one set of print information corresponding to the 3D model, wherein any one set of print information comprises print result information and at least part of print configuration information; and
an instruction generation module 902 for generating a print instruction in response to a print operation of a user regarding the 3D model, wherein the print instruction is used to instruct the printing of the 3D model based on the target print configuration information corresponding to the target print information in the at least one set of print information.

Optionally, the at least one set of print information comprises at least two sets of print information, and the apparatus further comprises:
an information selection module for, in response to a first selection operation of the user regarding the print information, selecting one set of print information specified by the first selection operation from the at least two sets of print information as target print information, wherein the print instruction is used to instruct the printing of the 3D model based on target print configuration information corresponding to the target print information.

Optionally, the operation of displaying the image of the 3D model and the at least one set of print information corresponding to the 3D model is in response to a second selection operation of the user regarding the 3D model, wherein the second selection operation is used to select the 3D model.

Optionally, print configuration information corresponding to each set of print information in the at least one set of print information describes one 3D printing configuration for the 3D model, wherein the each set of print information comprises at least part of the print configuration information corresponding to the each set of print information.

Optionally, the print result information comprises slicing result information.

Optionally, the slicing result information comprises at least one of 3D printing duration and required quantity of different-color materials.

Optionally, the print result information comprises at least one of user ratings and user reviews. Optionally, the at least part of print configuration information comprises a supported 3D printer model.

Optionally, the apparatus further comprises:
a part information display module for displaying at least two sets of part information corresponding to the target print configuration information, wherein the at least two sets of part information correspond to at least two sets of parts constituting the 3D model; and
a part information selection module for, in response to a third selection operation of the user regarding the part information, selecting one set of part information specified by the third selection operation from the at least two sets of part information as target part information, wherein the print instruction is used to instruct the printing of one set of parts corresponding to the target part information based on the target print configuration information.

Optionally, the apparatus further comprises:
a printer model display module for displaying at least two types of 3D printer models; and
a printer model selection module for, in response to a fourth selection operation of the user regarding the 3D printer model, selecting a 3D printer model specified by the fourth selection operation from the at least two types of 3D printer models as a target 3D printer model;
the information display module comprises an information display submodule for displaying the at least one set of print information supporting the target 3D printer model.

Optionally, the apparatus further comprises:
a printer display module for displaying at least two types of 3D printers; and
a printer selection module for, in response to a fifth selection operation of the user regarding the 3D printer, selecting a 3D printer specified by the fifth selection operation from the at least two types of 3D printers as a target 3D printer, wherein the print instruction is used to instruct the printing of the 3D model on the target 3D printer based on the target print configuration information;
the information display module comprises an information display submodule for displaying the at least one set of print information supporting the target 3D printer.

For the apparatus embodiments, since they are fundamentally similar to the method embodiments, the description is kept relatively simple. For related details, please refer to the corresponding part of the explanations in the method embodiment section.

In addition, an electronic device is further provided according to the embodiments of the present application. The electronic device comprises a processor, a memory, and a computer program stored in the memory and executable on the processor. The computer program, when executed by the processor, implements the various processes in the data acquisition method embodiments described above, achieving the same technical effects. To avoid repetition, further details are not elaborated here. A computer non-volatile readable storage medium is further provided according to the embodiments of the present application. The computer non-volatile readable storage medium stores a computer program, which, when executed by a processor, implements the various processes in the data acquisition method embodiments described above, achieving the same technical effects. To avoid repetition, further details are not elaborated here. The computer non-volatile readable storage medium includes read-only memory (ROM), random access memory (RAM), magnetic disks, or optical disks, among others.

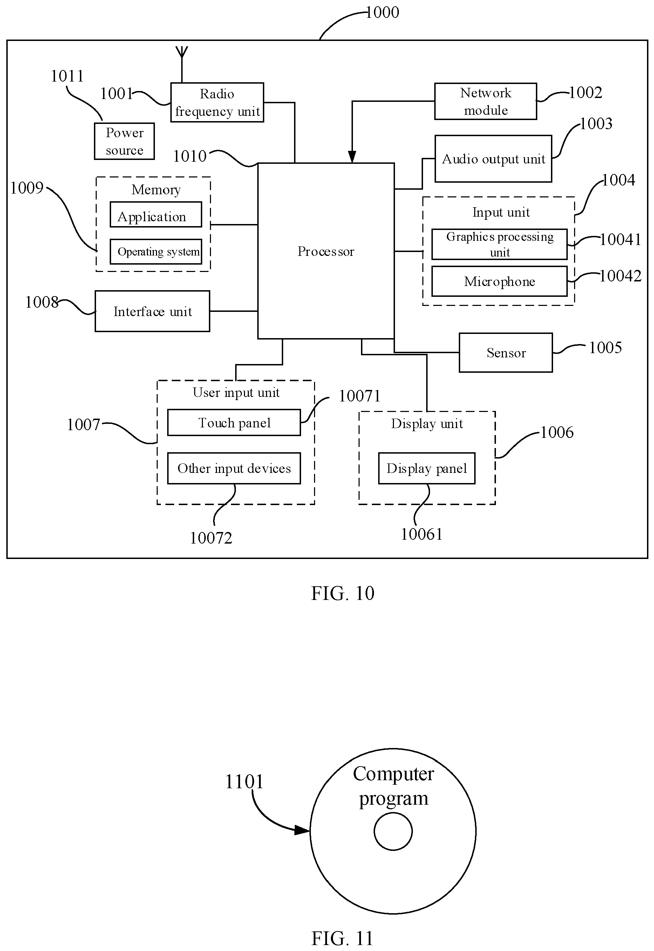

FIG. 10 is a schematic diagram of the hardware structure of an electronic device for implementing various embodiments of the present application.

The electronic device 1000 includes, but is not limited to: a radio frequency unit 1001, a network module 1002, an audio output unit 1003, an input unit 1004, a sensor 1005, a display unit 1006, a user input unit 1007, an interface unit 1008, a memory 1009, a processor 1010, and a power source 1011, among other components. Those skilled in the art will understand that the electronic device structure shown in FIG. 10 does not constitute a limitation to the electronic device. The electronic device may include more or fewer components than illustrated, combine certain components, or have different component arrangements. In the embodiments of the present application, electronic devices include, but are not limited to, mobile phones, tablets, laptops, handheld computers, vehicle terminals, wearable devices, and pedometers, among others.

It should be understood that, in the embodiments of the present application, the radio frequency unit 1001 may be used for receiving and sending signals during information transmission or call processes. Specifically, after receiving downlink data from a base station, the radio frequency unit forwards the data to the processor 1010 for processing. In addition, the radio frequency unit sends uplink data to the base station. Generally, the radio frequency unit 1001 includes, but is not limited to, an antenna, at least one amplifier, a transceiver, a coupler, a low-noise amplifier, and a duplexer, among others. Furthermore, the radio frequency unit 1001 may also communicate with networks and other devices through a wireless communication system.

The electronic device provides wireless broadband internet access to users through the network module 1002, such as assisting users in receiving and sending emails, browsing web pages, and accessing streaming media.

The audio output unit 1003 may convert audio data received by the radio frequency unit 1001 or the network module 1002, or stored in the memory 1009, into audio signals and output them as sound. Moreover, the audio output unit 1003 may also provide audio outputs related to specific functions performed by the electronic device 1000 (e.g., call signal reception sounds, message reception sounds, etc.). The audio output unit 1003 includes speakers, buzzers, and receivers, among others.

The input unit 1004 is used for receiving audio or video signals. The input unit 1004 may include a graphics processing unit (GPU) 10041 and a microphone 10042. The GPU 10041 processes the image data of static images or videos obtained by an image capture apparatus (such as a camera) in video capture mode or image capture mode. The processed image frames may be displayed on the display unit 1006. The image frames processed by the GPU 10041 may be stored in the memory 1009 (or other storage media) or sent via the radio frequency unit 1001 or the network module 1002. The microphone 10042 may receive sound and can convert such sound into audio data. The processed audio data may be, during a phone call mode, converted into a format for output that can be sent to mobile communication base stations via the radio frequency unit 1001.

The electronic device 1000 further includes at least one sensor 1005, such as a light sensor, a motion sensor, and other sensors. Specifically, the light sensor includes an ambient light sensor and a proximity sensor. The ambient light sensor may adjust the brightness of the display panel 10061 based on the ambient light conditions. The proximity sensor may turn off the display panel 10061 and/or backlight when the electronic device 1000 is brought close to the ear. An accelerometer sensor, as a type of motion sensor, may detect the magnitude of acceleration in various directions (typically three axes). When stationary, it may detect the magnitude and direction of gravity, which may be used to identify the posture of the electronic device (such as screen orientation switching, relevant games, magnetometer posture calibration), vibration identification-related functions (such as pedometers, tapping), etc. The sensor 1005 may also include fingerprint sensors, pressure sensors, iris sensors, molecular sensors, gyroscopes, barometers, hygrometers, thermometers, infrared sensors, etc, which are not elaborated here.

The display unit 1006 is used for displaying information input by a user or information provided to a user. The display unit 1006 may include a display panel 10061, which may be configured in the form of a liquid crystal display (LCD), or organic light-emitting diode (OLED), among others.

The user input unit 1007 may be used for receiving inputted numeric or character information and producing key signal inputs related to user settings and functional controls of the electronic device. Specifically, the user input unit 1007 includes a touch panel 10071 and other input devices 10072. The touch panel 10071, also referred to as a touchscreen, may collect touch operations by a user thereon or nearby (such as operations by a user on or near the touch panel 10071 using a finger, stylus, or any other suitable object or accessory). The touch panel 10071 may include a touch detection apparatus and a touch controller. The touch detection apparatus detects the position of the user's touch and the signals generated by touch operations, with the signals transmitted to the touch controller. The touch controller receives touch information from the touch detection apparatus, converts the information into touch coordinates, then sends the coordinates to the processor 1010, receives a command sent by the processor 1010, and executes the command. Furthermore, resistive, capacitive, infrared, and surface acoustic wave technologies are among the diverse types that may be used to implement the touch panel 10071. In addition to the touch panel 10071, the user input unit 1007 may further include other input devices 10072. Specifically, other input devices 10072 may include, but are not limited to, physical keyboards, function keys (such as volume control keys, power keys, etc.), trackballs, mice, and joysticks, among others, which are not elaborated here.

Furthermore, the touch panel 10071 may overlay the display panel 10061. When the touch panel 10071 detects touch operations thereon or nearby, it sends signals to the processor 1010 to determine the type of touch event. Subsequently, the processor 1010 provides corresponding visual output on the display panel 10061 based on the type of touch event. Although in FIG. 10, the touch panel 10071 and the display panel 10061 are shown as two independent components for implementing the input and output functions of the electronic device, in some embodiments, the touch panel 10071 may be integrated with the display panel 10061 to achieve the input and output functions of the electronic device. The specifics are not limited here.

The interface unit 1008 serves as the interface connecting an external apparatus to the electronic device 1000. For example, external apparatuses may include wired or wireless headphone ports, external power (or battery charger) ports, wired or wireless data ports, memory card slots, ports for connecting apparatuses with identification modules, audio input/output (I/O) ports, video I/O ports, earphone ports, and so on. The interface unit 1008 may be used for receiving input from an external apparatus (such as data information, power, etc.) and transmitting the received input to one or more elements within the electronic device 1000. Or, the interface unit may be used for transmitting data between the electronic device 1000 and an external apparatus. The memory 1009 may be used for storing software programs and various data. The memory 1009 may mainly include a program storage area and a data storage area. The program storage area may store the operating system and at least one application required for functions (such as sound playing function, image playing function, etc.). The data storage area may store data created based on the usage of a mobile phone (such as audio data, phone book, etc.). Furthermore, the memory 1009 may include high-speed random access memory and non-volatile memory, such as at least one disk storage device, flash memory device, or other volatile solid-state memory devices.

The processor 1010 is the control center of the electronic device, connecting various parts of the electronic device using various interfaces and circuits. The processor runs or executes software programs and/or modules stored in the memory 1009 and invokes data stored in the memory 1009 to perform various functions of the electronic device and process data, thereby monitoring the electronic device as a whole. The processor 1010 may include one or more processing units. Preferably, the processor 1010 may integrate an application processor and a modem processor, where the application processor mainly handles the operating system, user interface, and applications, while the modem processor mainly handles wireless communication. It should be understood that the aforementioned modem processor may also not be integrated into the processor 1010.

The electronic device 1000 may further include a power source 1011 (such as a battery) for supplying power to various components. Preferably, the power source 1011 may be logically connected to the processor 1010 through a power management system, thereby allowing the power management system to manage functions such as charging, discharging, and power consumption management.

In addition, the electronic device 1000 includes some functional modules that are not shown, which are not elaborated here.

A computer non-volatile readable storage medium is further provided according to the embodiments of the present application. As shown in FIG. 11, the computer non-volatile readable storage medium stores a computer program 1101, which, when executed by a processor, implements the various processes in the data acquisition method embodiments described above, achieving the same technical effects. To avoid repetition, further details are not elaborated here. The computer non-volatile readable storage medium includes read-only memory (ROM), random access memory (RAM), magnetic disks, or optical disks, among others.

It should be noted that in this document, the terms "comprise", "include", or any other variation thereof, are intended to be non-exclusive, meaning that a process, method, article, or apparatus that includes a list of elements includes not only those elements but may also include other elements not explicitly listed or inherent to such process, method, article, or apparatus. In the absence of further limitations, an element limited by the phrase "comprising a..." does not exclude the presence of additional identical elements in a process, method, article, or apparatus that includes the element.

From the description of the embodiments provided above, those skilled in the art can clearly understand that the methods of the aforementioned embodiments may be implemented through software plus a necessary general hardware platform, or be implemented through hardware. In many cases, the former is a preferable implementation. Based on such understanding, the technical solutions of the present application in essence, or the parts contributing to the existing technology, may essentially be embodied in the form of a software product. This computer software product is stored in a storage medium (such as ROM/RAM, magnetic disk, or optical disk) and includes several instructions to enable a terminal (which may be a mobile phone, computer, resource server, air conditioner, or network device, etc.) to execute the methods described in various embodiments of the present application.

The embodiments of the present application have been described above in conjunction with the accompanying drawings. However, the present application is not limited to the specific embodiments described above. The specific embodiments described above are merely illustrative rather than restrictive. Those of ordinary skill in the art, under the inspiration of the present application, may make numerous modifications and variations without departing from the spirit and the scope protected by the claims of the present application, all of which fall within the protection scope of the present application.

Those of ordinary skill in the art can appreciate that the various exemplary units and algorithmic steps described in conjunction with the embodiments disclosed in the embodiments of the present application can be implemented using electronic hardware, or a combination of computer software and electronic hardware. Whether these functions are executed in hardware or software depends on the specific application and design constraints of the technical solutions. Professionals may use different methods to implement the described functions for each specific application. However, such implementations should not be considered as exceeding the scope of the present application.

Those skilled in the art can clearly understand that, for the convenience and conciseness of description, the specific operational processes of the systems, apparatuses, and units described above may refer to the corresponding processes in the previously described method embodiments, which are not elaborated here.

In the embodiments provided by the present application, it should be understood that the disclosed apparatuses and methods may be implemented through other methods. For example, the apparatus embodiments described above are merely illustrative. The division of the units, for example, only represents a logical functional division. In actual implementation, there may be other division methods. For example, multiple units or components may be combined or integrated into another system, or some features may be ignored or not executed. Additionally, the mutual couplings or direct couplings or communication connections displayed or discussed may be indirect couplings or communication connections through some interfaces, apparatuses, or units. These connections may be electrical, mechanical, or of other forms.

The unit described as a separate component may or may not be physically separate. The component shown as a unit may or may not be a physical unit, that is, it may be located in one place or may be distributed across multiple network units. Part or all of the units may be selected based on actual needs to achieve the objectives of the solutions of the embodiments.

In addition, in each embodiment of the present application, the functional units may be integrated into one processing unit or may exist as separate physical units; or, two or more units may be integrated into one unit.

If the functions are implemented in the form of software functional units and sold or used as independent products, they may be stored in a computer-readable storage medium. Based on such understanding, the technical solutions of the present application in essence, or the parts contributing to the existing technology, or the technical solution parts may be embodied in the form of a software product. This computer software product is stored in a storage medium and includes several instructions to enable a computer device (which may be a personal computer, resource server, or network device, etc.) to execute all or part of the steps of the methods described in various embodiments of the present application. The aforementioned storage medium includes various media capable of storing program code, such as USB flash drives, portable hard drives, ROM, RAM, magnetic disks, or optical disks.

The above descriptions are specific embodiments of the present application. However, the protection scope of the present application is not limited to this. Any variations or substitutions that those skilled in the art can easily think of within the technical scope disclosed in the present application should be included within the protection scope of the present application. Therefore, the protection scope of the present application should be subjected to the protection scope defined by the claims.

## Claims

1. A 3D printing method, executed by a terminal and comprising:
displaying an image of a 3D model and at least one set of print information corresponding to the 3D model, wherein any one set of print information comprises print result information and at least part of print configuration information; and
generating a print instruction in response to a print operation of a user regarding the 3D model, wherein the print instruction is used to instruct the printing of the 3D model based on target print configuration information corresponding to target print information in the at least one set of print information.

2. The method according to claim 1, wherein the at least one set of print information comprises at least two sets of print information, and the method further comprises:
in response to a first selection operation of the user regarding the print information, selecting one set of print information specified by the first selection operation from the at least two sets of print information as target print information, wherein the print instruction is used to instruct the printing of the 3D model based on target print configuration information corresponding to the target print information.

3. The method according to claim 1 or 2, wherein the operation of displaying the image of the 3D model and the at least one set of print information corresponding to the 3D model is in response to a second selection operation of the user regarding the 3D model, wherein the second selection operation is used to select the 3D model.

4. The method according to any one of claims 1 to 3, wherein print configuration information corresponding to each set of print information in the at least one set of print information describes one 3D printing configuration for the 3D model, wherein the each set of print information comprises at least part of the print configuration information corresponding to the each set of print information.

5. The method according to any one of claims 1 to 4, wherein the print result information comprises slicing result information.

6. The method according to any one of claims 1 to 5, wherein the print result information comprises at least one of 3D printing duration and required quantity of different-color materials.

7. The method according to any one of claims 1 to 6, wherein the print result information comprises at least one of user ratings and user reviews.

8. The method according to any one of claims 1 to 7, wherein the at least part of print configuration information comprises a supported 3D printer model.

9. The method according to any one of claims 1 to 8, wherein before said generating the print instruction, the method further comprises:
displaying at least two sets of part information corresponding to the target print configuration information, wherein the at least two sets of part information correspond to at least two sets of parts constituting the 3D model; and
in response to a third selection operation of the user regarding the part information, selecting one set of part information specified by the third selection operation from the at least two sets of part information as target part information, wherein the print instruction is used to instruct the printing of one set of parts corresponding to the target part information based on the target print configuration information.

10. The method according to any one of claims 1 to 9, wherein before said generating the print instruction, the method further comprises:
displaying at least two types of 3D printer models; and
in response to a fourth selection operation of the user regarding the 3D printer model, selecting a 3D printer model specified by the fourth selection operation from the at least two types of 3D printer models as a target 3D printer model;
said displaying the image of the 3D model and the at least one set of print information corresponding to the 3D model, comprises: displaying the at least one set of print information supporting the target 3D printer model.

11. The method according to any one of claims 1 to 10, wherein the printing comprises slicing or executing a slicing result by a printer.

12. The method according to any one of claims 1 to 11, wherein after completing the print operation of the 3D model, the method further comprises:
in response to the user uploading an image, screenshot, or photo of the 3D model after printing, displaying the image, the screenshot, or the photo of the 3D model after printing.

13. The method according to any one of claims 1 to 12, wherein the at least part of print configuration information comprises at least one of a filament type and a hot bed type.

14. The method according to any one of claims 1 to 13, further comprising:
sending the print instruction to a cloud server, so as to allow the cloud server to slice the 3D model based on the target print configuration information to obtain a slicing result, wherein the slicing result is used for execution by a 3D printer to complete the printing of the 3D model.

15. The method according to any one of claims 1 to 13, wherein said generating the print instruction, comprises:
acquiring the target print configuration information from a cloud server; and slicing the 3D model based on the target print configuration information to obtain the print instruction;
and the method further comprises:
sending the print instruction to a 3D printer communicatively connected to the terminal, or sending the print instruction to a cloud server, such that the cloud server forwards the print instruction to the 3D printer, wherein the print instruction is used for execution by the 3D printer to complete the printing of the 3D model.

16. A model 3D printing apparatus, applied to a terminal and comprising:
an information display module for displaying an image of a 3D model and at least one set of print information corresponding to the 3D model, wherein any one set of print information comprises print result information and at least part of print configuration information; and
an instruction generation module for generating a print instruction in response to a print operation of a user regarding the 3D model, wherein the print instruction is used to instruct the printing of the 3D model based on target print configuration information corresponding to target print information in the at least one set of print information.

17. An electronic device, comprising a processor, a communication interface, a memory, and a communication bus, wherein the processor, the communication interface, and the memory communicates with each other through the communication bus;
the memory is used for storing a computer program; and
the processor is used for executing the program stored in the memory to implement the method according to any one of claims 1 to 15.

18. A computer-readable storage medium storing instructions, wherein the instructions, when executed by one or more processors, cause the processor to execute the method according to any one of claims 1 to 15.

19. A computer program product, wherein when the computer program product is run on a terminal, the terminal implements the 3D printing method according to any one of claims 1 to 15.
